# EUROPEAN PATENT SPECIFICATION

(11) **EP 3 491 810 B1**
(45) Date of publication and mention of the grant of the patent: **05.01.2022**
(21) Application number: 17743434.7
(22) Date of filing: 11.07.2017
(51) Int. Cl.: H04L 29/14, H04L 12/24

(54) **SYSTEM, METHOD, APPARATUS AND COMPUTER PROGRAM FOR PROVIDING TRANSMISSION OF COMPLIANCE REQUIREMENTS FOR CLOUD-BASED APPLICATIONS**
SYSTEM, VERFAHREN, VORRICHTUNG UND COMPUTERPROGRAMM ZUR BEREITSTELLUNG DER ÜBERTRAGUNG VON KONFORMITÄTSANFORDERUNGEN FÜR CLOUD-BASIERTE ANWENDUNGEN
SYSTÈME, PROCÉDÉ, APPAREIL ET PROGRAMME INFORMATIQUE POUR FOURNIR UNE ÉMISSION D'EXIGENCES DE CONFORMITÉ POUR DES APPLICATIONS EN NUAGE

(30) Priority: 26.07.2016 US 201615219428
(43) Date of publication of application: 05.06.2019
(73) Proprietor: Cisco Technology, Inc., San Jose, CA 95134 (US)
(72) Inventor: ANHOLT, Paul, San Jose, CA 95134 (US); SALGUEIRO, Gonzalo, San Jose, CA 95134 (US); JEUK, Sebastian, San Jose, CA 95134 (US)
(74) Representative: Mathys & Squire
(86) International application number: PCT/US2017/041468
(87) International publication number: WO 2018/022290

(56) References cited:
- US-A1- 2011 126 099
- US-A1- 2013 124 712
- US-A1- 2014 317 261
- US-A1- 2016 127 333

## Description

### TECHNICAL FIELD

This disclosure is directed to mechanisms to add compliance requirement information to the service function chain (SFC) headers (network service headers (NSH)) on a per-flow or per-hop basis so that an SFC Classifier or a controller can use a rules engine to classify or manage flows as requiring compliance, and virtual network functions (VNFs) can leverage the concepts disclosed herein to advertise their compliance capabilities to the SFC Classifier or the controller.

### BACKGROUND

In a cloud environment, a variety of compliance regulations can apply that a variety of applications must adhere to. These may include, but are not limited to, HÏPAA, payment card industry (PCI) security features, Sarbanes-Oxley (SOX) requirements, Customer Data Protection (CDP), legal requirements such as export controls, and so forth.

Cloud providers lack the necessary mechanisms to enforce compliance details and regulations at the network layer. Assuring the adherence to compliance regulations is a critical issue in cloud providers as it prevents tenants from moving sensitive data into the cloud that could violate certain regulations or laws. A function is needed that enables the definition of certain compliance parameters while being transmitted across the network to be leveraged by different network functions.

Policy enforcement in an information technology infrastructure is discussed in US 2011/0126099. In the disclosed approach, an event audit service evaluates events on an event bus in the infrastructure in view of relevant policies and provides policy evaluations to requesting entities. An approach for orchestration of virtualized network functions is described in US 2014/0317261. Deployment of virtual network services based on network infrastructure requirements and availability of network resources is described in US 2013/0124712. US 2016/0127333 discloses techniques for secure inter-virtual network function communication.

### BRIEF DESCRIPTION OF THE DRAWINGS

The disclosure will be readily understood by the following detailed description in conjunction with the accompanying drawings in which:
FIG. 1 illustrates the basic computing components of a computing device according to an aspect of this disclosure.
FIG. 2 illustrates the general context in which the present disclosure applies.
FIG. 3 illustrates an example method.

### SUMMARY OF THE INVENTION

The present invention is defined by the independent claims. Further embodiments are set forth in the dependent claims.

### DESCRIPTION

Cloud and service providers can host and provision numerous services and applications, and service a wide array of customers or tenants. These providers often implement cloud and virtualized environments, such as software-defined networks (e.g., OPENFLOW, SD-WAN, etc.) and/or overlay networks (e.g., VxLAN networks, NVGRE, SST, etc.), to host and provision the various solutions. Software-defined networks (SDNs) and overlay networks can implement network architectures that provide virtualization layers, and may decouple applications and services from the underlying physical infrastructure. Further, the capabilities of overlay and SDN networks can be used to create service chains of connected network services, such as firewall, network address translation (NAT), or load balancing services, which can be connected or chained together to form a virtual chain or service function chain (SFC).

SFCs can be used by providers to setup suites or catalogs of connected services, which may enable the use of a single network connection for many services, often with different characteristics. SFCs can have various advantages. For example, SFCs can enable automation of the provisioning of network applications and network connections.

Specific services or functions in an SFC can be virtualized through network function virtualization (NFV). A virtualized function, or VNF, can include one or more virtual machines (VMs) or software containers running specific software and processes. Accordingly, with NFV, custom hardware appliances are generally not necessary for each network function. The virtualized functions can thus provide software or virtual implementations of network functions, which can be deployed in a virtualization infrastructure that supports network function virtualization, such as SDN. NFV can provide flexibility, scalability, security, cost reduction, and other advantages.

The variety of services and associated characteristics associated with the various network functions in SFCs may also present significant challenges in adhering to compliance and regulatory requirements. Indeed, as previously explained, providers currently lack the necessary mechanisms to enforce compliance details and regulations at the network layer. This typically leads customers to avoid the cloud for services with specific compliance or regulatory requirements, often foregoing the numerous advantages offered by cloud providers and forcing these customers to create an individualized, and often costly and inefficient, solution for such services.

The proposed concept allows VNFs on the SFC to identify and communicate compliance enforcement/adherence information using network level protocols. In this manner, VNFs can obtain information about other VNFs and can implemented triggered actions for compliance requirements-based policy enforcement and implement associated traffic handling rules. There are a number of advantages to this approach. For example, VNFs in an SFC can be informed of the compliance requirements for a given data flow without having to know how to determine the compliance requirements. In another aspect, compliance information from an entity on can be sent and centralized for intelligent consumption by an external application/service. Further, Compliance-based policy enforcement can be applied intelligently and allow for automated solutions that apply traffic handling rules based on well-defined compliance-based SLAs.

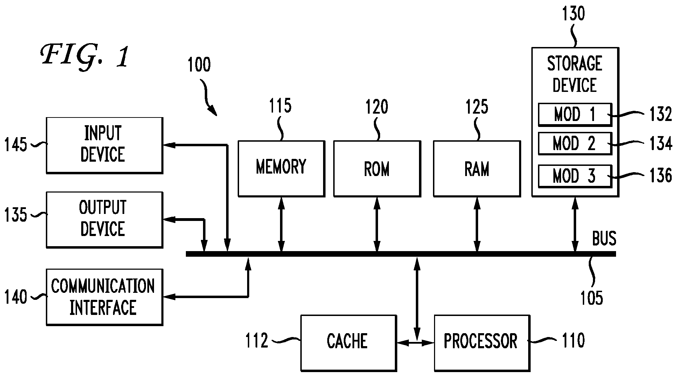

Application non-compliance identification can be simplified and automated. Remediation of application non-compliance can be intelligently implemented to improve the compliance offered by a cloud provider. After an introduction to the basic computing components in FIG. 1, a further discussion of compliance requirements shall follow.

FIG. 1 discloses some basic hardware components that can apply to system examples of the present disclosure. Following the discussion of the basic example hardware components, the disclosure will turn to the concept dealing with enforcing compliance details and regulations. With reference to FIG. 1, an exemplary system and/or computing device 100 includes a processing unit (CPU or processor) 110 and a system bus 105 that couples various system components including the system memory 115 such as read only memory (ROM) 120 and random access memory (RAM) 125 to the processor 110. The system 100 can include a cache 112 of high-speed memory connected directly with, in close proximity to, or integrated as part of the processor 110. The system 100 copies data from the memory 115, 120, and/or 125 and/or the storage device 130 to the cache 112 for quick access by the processor 110. In this way, the cache provides a performance boost that avoids processor 110 delays while waiting for data. These and other modules can control or be configured to control the processor 110 to perform various operations or actions. Other system memory 115 may be available for use as well. The memory 115 can include multiple different types of memory with different performance characteristics. It can be appreciated that the disclosure may operate on a computing device 100 with more than one processor 110 or on a group or cluster of computing devices networked together to provide greater processing capability. The processor 110 can include any general purpose processor and a hardware module or software module, such as module 1 132, module 2 134, and module 3 136 stored in storage device 130, configured to control the processor 110 as well as a special-purpose processor where software instructions are incorporated into the processor. The processor 110 may be a self-contained computing system, containing multiple cores or processors, a bus, memory controller, cache, etc. A multi-core processor may be symmetric or asymmetric. The processor 110 can include multiple processors, such as a system having multiple, physically separate processors in different sockets, or a system having multiple processor cores on a single physical chip. Similarly, the processor 110 can include multiple distributed processors located in multiple separate computing devices, but working together such as via a communications network. Multiple processors or processor cores can share resources such as memory 115 or the cache 112, or can operate using independent resources. The processor 110 can include one or more of a state machine, an application specific integrated circuit (ASIC), or a programmable gate array (PGA) including a field PGA.

The system bus 105 may be any of several types of bus structures including a memory bus or memory controller, a peripheral bus, and a local bus using any of a variety of bus architectures. A basic input/output system (BIOS) stored in ROM 120 or the like, may provide the basic routine that helps to transfer information between elements within the computing device 100, such as during start-up. The computing device 100 further includes storage devices 130 or computer-readable storage media such as a hard disk drive, a magnetic disk drive, an optical disk drive, tape drive, solid-state drive, RAM drive, removable storage devices, a redundant array of inexpensive disks (RAID), hybrid storage device, or the like. The storage device 130 is connected to the system bus 105 by a drive interface. The drives and the associated computer-readable storage devices provide nonvolatile storage of computer-readable instructions, data structures, program modules and other data for the computing device 100. In one aspect, a hardware module that performs a particular function includes the software component stored in a tangible computer-readable storage device in connection with the necessary hardware components, such as the processor 110, bus 105, an output device such as a display 135, and so forth, to carry out a particular function. In another aspect, the system can use a processor and computer-readable storage device to store instructions which, when executed by the processor, cause the processor to perform operations, a method or other specific actions. The basic components and appropriate variations can be modified depending on the type of device, such as whether the computing device 100 is a small, handheld computing device, a desktop computer, or a computer server. When the processor 110 executes instructions to perform "operations", the processor 110 can perform the operations directly and/or facilitate, direct, or cooperate with another device or component to perform the operations.

Although the exemplary embodiment(s) described herein employs a storage device such as a hard disk 130, other types of computer-readable storage devices which can store data that are accessible by a computer, such as magnetic cassettes, flash memory cards, digital versatile disks (DVDs), cartridges, random access memories (RAMs) 125, read only memory (ROM) 120, a cable containing a bit stream and the like, may also be used in the exemplary operating environment. According to this disclosure, tangible computer-readable storage media, computer-readable storage devices, computer-readable storage media, and computer-readable memory devices, expressly exclude media such as transitory waves, energy, carrier signals, electromagnetic waves, and signals per se.

To enable user interaction with the computing device 100, an input device 145 represents any number of input mechanisms, such as a microphone for speech, a touch-sensitive screen for gesture or graphical input, keyboard, mouse, motion input, speech and so forth. An output device 135 can also be one or more of a number of output mechanisms known to those of skill in the art. In some instances, multimodal systems enable a user to provide multiple types of input to communicate with the computing device 100. The communications interface 140 generally governs and manages the user input and system output. There is no restriction on operating on any particular hardware arrangement and therefore the basic hardware depicted may easily be substituted for improved hardware or firmware arrangements as they are developed.

For clarity of explanation, the illustrative system embodiment is presented as including individual functional blocks including functional blocks labeled as a "processor" or processor 110. The functions these blocks represent may be provided through the use of either shared or dedicated hardware, including, but not limited to, hardware capable of executing software and hardware, such as a processor 110, that is purpose-built to operate as an equivalent to software executing on a general purpose processor. For example the functions of one or more processors presented in FIG. 1 can be provided by a single shared processor or multiple processors. (Use of the term "processor" should not be construed to refer exclusively to hardware capable of executing software.) Illustrative embodiments may include microprocessor and/or digital signal processor (DSP) hardware, read-only memory (ROM) 120 for storing software performing the operations described below, and random access memory (RAM) 125 for storing results. Very large scale integration (VLSI) hardware embodiments, as well as custom VLSI circuitry in combination with a general purpose DSP circuit, may also be provided.

The logical operations of the various embodiments are implemented as: (1) a sequence of computer implemented steps, operations, or procedures running on a programmable circuit within a general use computer, (2) a sequence of computer implemented steps, operations, or procedures running on a specific-use programmable circuit; and/or (3) interconnected machine modules or program engines within the programmable circuits. The system 100 shown in FIG. 1 can practice all or part of the recited methods, can be a part of the recited systems, and/or can operate according to instructions in the recited tangible computer-readable storage devices. Such logical operations can be implemented as modules configured to control the processor 110 to perform particular functions according to the programming of the module. For example, FIG. 1 illustrates three modules Mod1 132, Mod2 134 and Mod3 136 which are modules configured to control the processor 110. These modules may be stored on the storage device 130 and loaded into RAM 125 or memory 115 at runtime or may be stored in other computer-readable memory locations.

One or more parts of the example computing device 100, up to and including the entire computing device 100, can be virtualized. For example, a virtual processor can be a software object that executes according to a particular instruction set, even when a physical processor of the same type as the virtual processor is unavailable. A virtualization layer or a virtual "host" can enable virtualized components of one or more different computing devices or device types by translating virtualized operations to actual operations. Ultimately however, virtualized hardware of every type is implemented or executed by some underlying physical hardware. Thus, a virtualization compute layer can operate on top of a physical compute layer. The virtualization compute layer can include one or more of a virtual machine, an overlay network, a hypervisor, virtual switching, and any other virtualization application.

The processor 110 can include all types of processors disclosed herein, including a virtual processor. However, when referring to a virtual processor, the processor 110 includes the software components associated with executing the virtual processor in a virtualization layer and underlying hardware necessary to execute the virtualization layer. The system 100 can include a physical or virtual processor 110 that receive instructions stored in a computer-readable storage device, which cause the processor 110 to perform certain operations. When referring to a virtual processor 110, the system also includes the underlying physical hardware executing the virtual processor 110.

The concepts disclosed herein can be particularly applicable to the use of containers and packet flows when distributing workload across many containers. Such a distribution of workload across containers is a highly demanded way to deploy applications. Compared to virtual machines, containers are lightweight, quick and easy to spawn and destroy. With the increasing interest in container-based deployments, the network has to adapt to container-specific traffic patterns. Container technology, such as DOCKER and LINUX CONTAINERS (LXC), is intended to run a single application and does not represent a full-machine virtualization. A container can provide an entire runtime environment: an application, plus all its dependencies, libraries and other binaries, and configuration files needed to run it, bundled into one package. By containerizing the application platform and its dependencies, differences in operating system distributions and underlying infrastructure are abstracted away.

With virtualization technology, the package that can be passed around is a virtual machine and it includes an entire operating system as well as the application. A physical server running three virtual machines would have a hypervisor and three separate operating systems running on top of it. By contrast, a server running three containerized applications, as with DOCKER, runs a single operating system, and each container shares the operating system kernel with the other containers. Shared parts of the operating system are read only, while each container has its own mount (i.e., a way to access the container) for writing. That means the containers are much more lightweight and use far fewer resources than virtual machines.

Other containers exist as well such as the LXC that provide an operating-system-level virtualization method for running multiple isolated Linux systems (containers) on a control host using a single Linux kernel. These containers are considered as something between a chroot (an operation that changes the apparent root directory for a current running process) and a full-fledged virtual machine. They seek to create an environment that is as close as possible to a Linux installation without the need for a separate kernel.

The disclosure now turns to the compliance aspect and how to receive and implement compliance regulations in a network. It is noted that the principles are not limited to the formal network layer of the OSI model. Depending on the network function, the information used herein, the compliance issue and actions taken can apply to different components or layers of a network. The formal network layer can operate as a transport layer for many of the functions described herein. However, compliance can mean many different things, such as customer data protection, cloud compliance, security based compliance, SOX compliance, and so forth. The compliance or reference to the "network" can apply to any different layer and even up to an application layer. Thus, as used herein, references to "network layer" may not be limited to the network layer (i.e., layer 3) of the OSI model, and may include other layers (e.g., L1-L7) of the OSI model as well as other model or frameworks (e.g., TCP/IP model or stack). For example, reference to operation X being implemented at the "network layer" can mean that the operation X is implemented by the network or at the network level, including one or more layers in a network model such as OSI.

Numerous compliance bodies exist which enforce rules and regulations as to how data must be handled in flight and at rest. A cloud service provider may have many tenants with different compliance requirements, which creates operational complexity to configure every VNF to identify and handle the compliance requirements for a given data flow.

For example, a common HIPAA requirement mandates a record retention period of 30 years for medical records. A healthcare company using a cloud storage solution may wish to store data in the cloud which is bound by its retention policy as well as other, non-sensitive data.

A second example could be the SOX requirement that collection and monitoring systems must provide an audit trail of all access and activity to sensitive business information. VNFs handling data flows which meet this requirement must keep audit logs, but not all data may meet this requirement and logging any/all interactions may not be feasible.

A third example can be compliance to customer data protection (CDP) requirements. Many countries have strict CDP policies in place that only allow hosting of an application within country borders as well as strict policies around not allowing customer data associated with that application to cross country borders. This frequently comes up in situations like deploying a Cisco Unified Communications Manager (CUCM) in places like Germany, which has strict CDP policies, and not allowing any of the associated application data (Call Detail Records, etc.) to go across German borders. Similarly, the United States, and many other countries, have export control requirements that restrict the export of technical information, which can be found in patent applications, for example, prior to government review and authorization via the granted of a foreign filing license.

This is by no means an exhaustive list but should provide insight into how prevalent these compliance issues are, especially for large cloud providers and multi-national enterprises with points-of-presence globally. The disclosed idea aims to address this issue by proposing an on-network solution whereby compliance information is communicated by VNFs in an SFC through the use of (type 1 or 2) metadata field in the Network Service Header (NSH).

The concept can allow VNFs to communicate their compliance status for a variety of different compliance standards/bodies within the NSH metadata. This metadata can be centralized by an SDN-type controller (OpenDaylight, etc.) to provide one-stop application compliance visibility for the Cloud environment. Additionally, the central agent can have pre-configured triggers and SLAs regarding compliance such that automation can be put in to proactively trigger traffic handling policies (i.e., stop sending traffic to non-compliant VNFs, trigger automated remediation for non- compliant nodes, etc).

In one aspect, the usage of compliance and regulation details, in correlation with other relevant information such as geo-locations, cloud identifiers, combined with the compliance and regulation information with geo-locations, allows cloud providers to define location specific regulations to enforce. For example, country laws can be enforced to maintain data within certain geographic locations. With the incorporation into the NSH within a SFC, network functions can perform very specific functions based on the regulations defined. One example can be the use of a forwarding engine to define flow rules to either avoid certain geographical locations or route traffic to specific locations based on compliance requirements. This way, the cloud provider can assure that traffic from a specific service is handled by network functions fulfilling the compliance and regulation demands. In other words, a particular network function involved with managing the storage of data that is regulated by a law that the data must remain in a certain jurisdiction can have the compliance information associated with the network function, data flow, container, and/or the VNF, and so forth. The metadata (the compliance information found in the header) can be handled by a storage endpoint in a certain way such that the data storage endpoint will follow the compliance rules with respect to storage and distribution of data.

Another embodiment includes the combination of compliance and regulation details with cloud identification information that would allow the service specific definition of a compliant SFC. For example, leveraging the cloud identifier in correlation with compliance and regulation information a cloud provider (and/or tenant) could define SFCs that meet the regulations specific to a certain cloud service. With the correlation of relevant information and the compliance details, a cloud provider could assure adherence to regulations defined by country laws or governed by other compliance bodies. In this regard, the concepts involve more intelligently creating and deploying the SFC in the first instance to incorporate compliance requirements. This can include the selection of location data storage and data flow paths, type of hardware or virtual compute resources that are implemented, security or encryption services chosen, and so forth. For example, compliance requirements in one case may relate to data latency for say a voice-over-IP service. In that case, the types of resources deployed may be an important factor to insure low latency for telephone conversations.

Tenant identifiers and/or workload identifiers can also be used to aid in compliance. One or more of these identifiers, combined with regulations/country laws, SLA agreements, all the various information that you can get from compliance bodies, can be used to make final decisions on routing of data, interactions between VNFs and/or endpoints, creating and deployment of SFCs, etc.

The compliance regulations can come from any number of sources. For example, management of medical records would be application wide and would not different from tenant to tenant. Countries might have different requirements. Germany might have certain compliance requirements (say 30 years of maintenance of records) while other countries may not (say Italy has a 20 year requirement). In some cases, complying with one requirement (such as the data must stay in Germany), can result in the system inferring another requirement (how long to maintain medical records.) Thus, in some cases where there is correlation between compliance requirements, and where there might be gaps in explicit compliance data in any particular aspect, the system can infer unknown requirements.

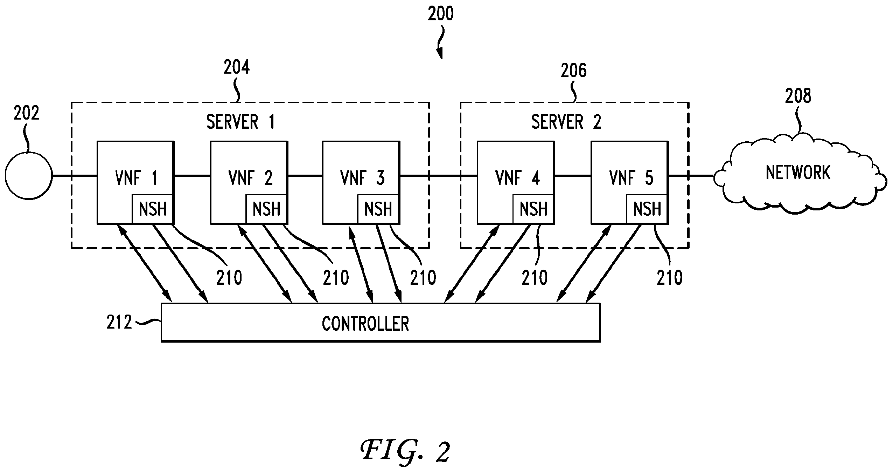

The disclosure now turns to FIG. 2 which illustrates a general structure. Shown in FIG. 2 is a service function chain that includes workload or packet flow 202 which is submitted to the chain. A first server 204 contains virtual network functions (VNFs) 1, 2 and 3. Another server 206 contains VNFs 4 and 5 and which connects to a network 208. The virtual network functions represent the SFC and the order thereof. The network service header (NSH) 210 is shown as being associated with each VNF and is a data field that is used as part of the operation of containerized VNFs which is accessed for reporting compliance requirements and status. In some cases, the NSH can be a header, such as a data plane header, added to frames/packets. The NSH can contain information for service chaining, service path information, as well as metadata added and consumed by network nodes and service elements. The NSH can also include information about compliance or regulatory requirements, such as data retention requirements, data storage or routing requirements, data privacy requirements, data usage requirements, performance requirements, reporting requirements, etc.

When a network function is responsible for a process such as storing data at a particular end point, the kind of traffic associated with the process and storage is not only managed by the network function, but it can also be aware of the compliance issues associated with that data flow and insure or report the compliance requirements.

This disclosure provides a compliance framework that makes use of a metadata field (such as the NSH field) to expedite knowledge of a communication about compliance regulations and activities as well as provide an automated and intelligent mechanism to remediate and recover from out of compliance activity in a cloud environment. A mechanism is proposed herein by which a variety of compliance regulations (medical compliance, data storage compliance, geographic compliance, latency requirements, bandwidth usage, data related usage or needs, etc.) can be reported from containerized VNFs within an SFC. In one aspect, the advertising of compliance requirements and success in fulfilling the requirements, in addition to the host-based compliance issues mentioned above, can provide a complete picture of the cloud environment compliance issues and the underlying network infrastructure.

This advertisement of host (and potentially network) compliance requirements is performed, on one example, by making use of the NSH (Type 1 or 2) metadata fields as a means of centralizing at a controller 212 (such as OpenDaylight, etc.) this valuable information to be consumed as needed. The controller 212 can receive and process the various pieces of data to make compliance-based decisions or modifications to the SFC. Other data fields other than the NSH could be used as well. FIG. 2 illustrates multiple VNFs 1-5 that can be hosted by a single or multiple bare-metal servers 204, 206 this mechanism can report host-based (as well as underlying network-based) resource usage for the respective VNFs as well as for the hosting bare-metal server (as a per container fraction of the total usage, etc.).

The compliance success/failure reporting can be centralized, for example at the central software defined network controller 212, consumed and acted upon by the controller 212. The compliance data can be host-based, network-based, flow-based, container-based, hop-based, cloud-based, tenant-based, container-based, workload-based, etc. and can be used for a number of purposes, such as enhanced centralized visibility of data center and underlying network infrastructure, simplified troubleshooting of resource compliance (i.e. data retention policies, medical policies, etc.) issues, and so forth. In yet another aspect, the system can automate the fulfilment, remediation and/or mitigation of containers due to compliance issues in a dynamic and intelligent fashion. The NSH-based reporting of compliance data can be centralized and consumed by the SDN controller 212 in a manner that intelligent automation is built in such that workload migration or flow routing is proactively triggered based on thresholds or compliance requirement-based policy enforcement decisions.

Imagine a server 204, 206 hosting multiple containers. Assume one container is experiencing a compliance requirement issue (data deletion too early, problems with geographic distribution of data, security of data becoming too low, etc.). The advertising/reporting approach enables this information to be automatically detected based on proactive triggers and the issue can be reported to the container orchestration layer (DOCKER, DOCKERSWARM, CLOUDIFY, etc) to trigger automated remedy of the out-of-compliance container to a more suitable location able to provide the necessary resources to run it properly.

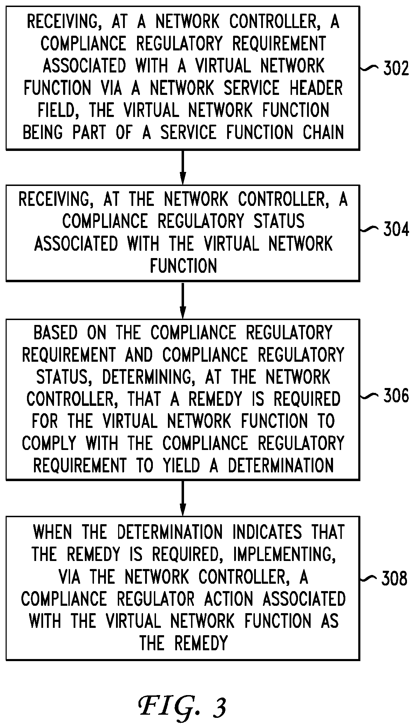

FIG. 3 illustrates the method aspect. An example method embodiment includes receiving, at a network controller, a compliance regulatory requirement associated with a virtual network function via a network service header field, the virtual network function being part of a service function chain (302), and receiving, at the network controller, a compliance regulatory status associated with the virtual network function (304). Based on the compliance regulatory requirement and compliance regulatory status, the method includes determining, at the network controller, that a remedy is required for the virtual network function to comply with the compliance regulatory requirement to yield a determination (306). When the determination indicates that the remedy is required, the method includes implementing, via the network controller, a compliance regulatory action associated with the virtual network function as the remedy (308).

The method can also include receiving additional data including one of (1) a geo-location associated with the compliance regulatory requirement, (2) a cloud-identifier, (3) a workload-identifier and (4) a tenant identifier. The additional data can be correlated with the compliance regulatory requirement and the compliance regulatory status to determine the remedy or actions to be taken. In one example, the additional data includes the geo-location and the remedy/action can relate to maintaining application data within a country boundary, or any other geographic boundary. One example of the compliance regulatory requirement can include a length of time data is to be maintained prior to being deleted. The compliance regulatory requirement can include providing an audit trail of all access and activity to certain information. The remedy or solution can include a compliance regulatory action to address the requirement that, based on the feedback, is not currently being met.

The network controller can include a software defined network controller having a policy that governs generating the remedy. The compliance regulatory action includes: (1) preventing data from flowing to a virtual network function not in compliance with the compliance regulatory requirement; and (2) implementing the remedy. For example, the compliance regulatory action can include implementing a data traffic routing policy. The compliance regulatory requirement can be applied to the creation of the SFC or of migrating the SFC to a new location that is anticipated to enable the SFC to be in compliance. The compliance regulatory requirement can be associated with a cloud provider through the receipt and use of a cloud identifier. The compliance regulatory requirement applies on a per-flow or a per-hop basis between virtual network functions within the SFC.

The disclosed approach can also enable network functions to not only leverage provided compliance information but additionally advertise performed actions such as enforcing policies. The information can then be used by the preceding network function virtualizations (NFVs) to not only base their decisions on the provided compliance requirements but also on the previous NFV actions. For example, in a SFC having a storage NFV and a routing NFV, the storage NFV, based on the compliance information received for a specific traffic flow, can identify, define or apply a policy that restricts storage to a certain geographical location for that specific traffic flow or some other identified traffic flow. This information could be used by the next NFV within that SFC (here for example a routing NFV) that would route traffic accordingly or apply certain routing policies to the traffic.

The method can also include analyzing a traffic flow associated with a virtual network function to yield an analysis and classifying a regulatory compliance requirement based on the analysis. An SFC classifier can perform the classification. In a generic way, the classifier says this type of traffic is interesting for a particular SFC. The traffic can be classified with a 5-tuple, for example, which can include a MAC address, IP address, destination, port number, and a protocol. That information can be used to classify traffic associated with an SFC. Metadata for compliance information may not be available at a starting point of the SFC, from the SFC perspective. The compliance information may exist after the classifier classifies the data. The component 212 in FIG. 2 can represent the SFC classifier that can receive traffic flows from any portion of a network such as between VNFs.

The SFC classifier itself can be a relatively simple component within a SFV environment. The usage of cloud identifiers (in addition to or independent from the typical 5-Tuple flow identification) can enable a more fine-grained classification of traffic flows. The use of cloud identifiers can further also enable classification at a provider, service, tenant, and workload ID level. By applying these different classification levels, the compliance information can be applied very specifically to flows originated or destined to/from specific tenants/services (or even per workflow) within a cloud environment.

The SFC classifier can perform classification and impose an NSH, and may also create a service path. The classification can be a locally instantiated policy and/or customer, network, service, and/or compliance profile matching of traffic flows for identification of appropriate handling, including outbound forwarding actions. Classification information can also include, for example, metadata such as application type, compliance information, enforcement information, handling information, forwarding information, service path selection information, context information, network information, service policy information, etc. Moreover, classification can be performed per-service, per-flow, per-chain, per-segment, etc. In some examples, classification can be performed at each service function independent from previously applied service functions or classifications.

NSH aware nodes (e.g., classifier, controller, SFC forwarder, NSH server, etc.) can have several header-related actions, such as insertion/removal of NSH, service path selection, updates to NSH, service or compliance policy selection, NSH encapsulation, NSH usage (e.g., forwarding, service chaining, metadata sharing, etc.), and so forth.

One aspect an also include a computer-readable storage device which stores instructions for controlling a processor to perform any of the steps disclosed herein. The storage device can include any such physical devices that store data such as ROM, RAM, hard drives of various types, and the like.

Claim language reciting "at least one of" a set indicates that one member of the set or multiple members of the set satisfy the claim. For example, claim language reciting "at least one of A and B" means A, B, or A and B. The present examples are to be considered as illustrative and not restrictive, and the examples is not to be limited to the details given herein, but may be modified within the scope of the appended claims.

## Claims

1. A method comprising:
receiving, at a network controller (212), a compliance regulatory requirement associated with a virtual network function (VNF1-VNF5) via a network service header field (210), the virtual network function being part of a service function chain;
receiving, at the network controller, a compliance regulatory status associated with the virtual network function, the compliance regulatory status included within metadata in the network service header;
based on the compliance regulatory requirement and compliance regulatory status in the network service header, determining, at the network controller, that a remedy is required for the virtual network function to comply with the compliance regulatory requirement to yield a determination; and
when the determination indicates that the remedy is required, implementing, via the network controller, a compliance regulatory action associated with the virtual network function as the remedy, wherein the compliance regulatory action comprises preventing data from flowing to a virtual network function not in compliance with the compliance regulatory requirement.

2. The method of claim 1, further comprising:
receiving additional data comprising one of (1) a geo-location associated with the compliance regulatory requirement, (2) a cloud-identifier, (3) a workload- identifier and (4) a tenant identifier, optionally wherein the additional data is correlated with the compliance regulatory requirement and the compliance regulatory status to determine the remedy.

3. The method of claim 2, wherein the additional data comprises the geo- location and wherein the remedy comprises maintaining application data within a country boundary.

4. The method of any of claims 1 to 3, wherein the compliance regulatory requirement comprises a length of time data is to be maintained prior to being deleted.

5. The method of any of claims 1 to 4, wherein the compliance regulatory requirement comprises providing an audit trail of all access and activity to certain information.

6. The method of any of claims 1 to 5, wherein the network service header field comprises a type 1 or type 2 metadata.

7. The method of any of claims 1 to 6, wherein the network controller comprises a software defined network controller in a software-defined network, the software defined network controller having a policy that governs generating the remedy.

8. The method of any of claims 1 to 7, wherein the compliance regulatory action comprises implementing a data traffic routing policy.

9. The method of any of claims 1 to 8, wherein the compliance regulatory requirement is applied to a creation of the service function chain, optionally wherein the compliance regulatory requirement is associated with a cloud provider.

10. The method of any of claims 1 to 9, wherein the compliance regulatory requirement applies on a per-flow or a per-hop basis between virtual network functions within a service function chain.

11. The method of any of claims 1 to 10, further comprising:
analyzing a traffic flow associated with a virtual network function to yield an analysis; and
classifying a regulatory compliance requirement based on the analysis.

12. A system (100) comprising:
one or more processors (110); and
a computer-readable storage device (130) storing instruction which, when executed by the one or more processors, cause the one or more processors to perform operations comprising a method according to any preceding claim.

13. Apparatus comprising a network controller (212), the network controller comprising:
means for receiving a compliance regulatory requirement associated with a virtual network function (VNF1-VNF5) via a network service header field (210), the virtual network function being part of a service function chain;
means for receiving a compliance regulatory status associated with the virtual network function, the compliance regulatory status included within metadata in the network service header;
means for determining, based on the compliance regulatory requirement and compliance regulatory status in the network service header, that a remedy is required for the virtual network function to comply with the compliance regulatory requirement to yield a determination; and
means for implementing, when the determination indicates that the remedy is required, via the network controller, a compliance regulatory action associated with the virtual network function as the remedy, wherein the compliance regulatory action comprises preventing data from flowing to a virtual network function not in compliance with the compliance regulatory requirement.

14. Apparatus according to claim 13, further comprising means for implementing the method according to any of claims 2 to 11.

15. A computer program, computer program product or logic encoded on a tangible computer readable medium comprising instructions for implementing the method according to any one of claims 1 to 11.

## Patentansprüche

1. Verfahren, das Folgendes beinhaltet:
Empfangen, an einer Netzwerksteuerung (212), einer mit einer virtuellen Netzwerkfunktion (VNF1-VNF5) über ein Netzwerkdienst-Headerfeld (210) assoziierten Anforderung zur Einhaltung gesetzlicher Vorschriften, wobei die virtuelle Netzwerkfunktion Teil einer Dienstfunktionskette ist;
Empfangen, an der Netzwerksteuerung, eines mit der virtuellen Netzwerkfunktion assoziierten Status der Einhaltung gesetzlicher Vorschriften, wobei der Status der Einhaltung gesetzlicher Vorschriften in den Metadaten im Netzwerkdienst-Header enthalten ist;
Feststellen, an der Netzwerksteuerung, auf der Basis der Anforderung zur Einhaltung gesetzlicher Vorschriften und des Status der Einhaltung gesetzlicher Vorschriften im Netzwerkdienst-Header, dass eine Abhilfe erforderlich ist, damit die virtuelle Netzwerkfunktion die Anforderung zur Einhaltung gesetzlicher Vorschriften erfüllt, um eine Feststellung zu erhalten; und
Implementieren, über die Netzwerksteuerung, wenn die Feststellung anzeigt, dass die Abhilfe erforderlich ist, einer mit der virtuellen Netzwerkfunktion assoziierten Maßnahme zur Einhaltung gesetzlicher Vorschriften als Abhilfe, wobei die Maßnahme zur Einhaltung gesetzlicher Vorschriften das Verhindern eines Datenflusses zu einer virtuellen Netzwerkfunktion beinhaltet, die die Anforderung zur Einhaltung gesetzlicher Vorschriften nicht erfüllt.

2. Verfahren nach Anspruch 1, das ferner Folgendes beinhaltet:
Empfangen zusätzlicher Daten, die eines der Folgenden umfassen: (1) eine mit der Anforderung zur Einhaltung gesetzlicher Vorschriften assoziierte Geoposition, (2) eine Cloud-Kennung, (3) eine Workload-Kennung und (4) eine Tenant-Kennung, wobei die zusätzlichen Daten optional mit der Anforderung zur Einhaltung gesetzlicher Vorschriften und dem Status der Einhaltung gesetzlicher Vorschriften korreliert werden, um die Abhilfe zu bestimmen.

3. Verfahren nach Anspruch 2, wobei die zusätzlichen Daten die Geoposition umfassen und wobei die Abhilfe das Betreuen von Anwendungsdaten innerhalb einer Landesgrenze beinhaltet.

4. Verfahren nach einem der Ansprüche 1 bis 3, wobei die Anforderung zur Einhaltung gesetzlicher Vorschriften eine Zeitspanne umfasst, in der Daten betreut werden müssen, bevor sie gelöscht werden.

5. Verfahren nach einem der Ansprüche 1 bis 4, wobei die Anforderung zur Einhaltung gesetzlicher Vorschriften das Bereitstellen eines Audit-Trails für alle Zugriffe und Aktivitäten auf bestimmte Informationen beinhaltet.

6. Verfahren nach einem der Ansprüche 1 bis 5, wobei das Netzwerkdienst-Headerfeld Metadaten von Typ 1 oder Typ 2 umfasst.

7. Verfahren nach einem der Ansprüche 1 bis 6, wobei die Netzwerksteuerung eine Software-definierte Netzwerksteuerung in einem Software-definierten Netzwerk umfasst, wobei die Software-definierte Netzwerksteuerung eine Richtlinie hat, die das Erzeugen der Abhilfe regelt.

8. Verfahren nach einem der Ansprüche 1 bis 7, wobei die Maßnahme zur Einhaltung gesetzlicher Vorschriften das Implementieren einer Datenverkehrsrouting-Richtlinie beinhaltet.

9. Verfahren nach einem der Ansprüche 1 bis 8, wobei die Anforderung zur Einhaltung gesetzlicher Vorschriften auf die Erstellung der Dienstfunktionskette angewendet wird, wobei die Anforderung zur Einhaltung gesetzlicher Vorschriften optional mit einem Cloud-Anbieter assoziiert ist.

10. Verfahren nach einem der Ansprüche 1 bis 9, wobei die Anforderung zur Einhaltung gesetzlicher Vorschriften auf einer Pro-Flow- oder einer Pro-Hop-Basis zwischen virtuellen Netzwerkfunktionen innerhalb einer Dienstfunktionskette gilt.

11. Verfahren nach einem der Ansprüche 1 bis 10, das ferner Folgendes beinhaltet:
Analysieren eines mit einer virtuellen Netzwerkfunktion assoziierten Verkehrsflusses, um eine Analyse zu erhalten; und
Klassifizieren einer Anforderung zur Einhaltung gesetzlicher Vorschriften auf der Basis der Analyse.

12. System (100), das Folgendes umfasst:
einen oder mehrere Prozessoren (110); und
ein computerlesbares Speichergerät (130), das Befehle speichert, die bei Ausführung durch die ein oder mehreren Prozessoren bewirken, dass die ein oder mehreren Prozessoren Operationen durchführen, die ein Verfahren nach einem vorherigen Anspruch umfassen.

13. Vorrichtung mit einer Netzwerksteuerung (212), wobei die Netzwerksteuerung Folgendes umfasst:
Mittel zum Empfangen einer mit einer virtuellen Netzwerkfunktion (VNF1-VNF5) über ein Netzwerkdienst-Headerfeld (210) assoziierten Anforderung zur Einhaltung gesetzlicher Vorschriften, wobei die virtuelle Netzwerkfunktion Teil einer Dienstfunktionskette ist;
Mittel zum Empfangen eines mit der virtuellen Netzwerkfunktion assoziierten Status der Einhaltung gesetzlicher Vorschriften, wobei der Status der Einhaltung gesetzlicher Vorschriften in den Metadaten im Netzwerkdienst-Header enthalten ist;
Mittel zum Feststellen, auf der Basis der Anforderung zur Einhaltung gesetzlicher Vorschriften und des Status der Einhaltung gesetzlicher Vorschriften im Netzwerkdienst-Header, dass eine Abhilfe erforderlich ist, damit die virtuelle Netzwerkfunktion die Anforderung zur Einhaltung gesetzlicher Vorschriften erfüllt, um eine Feststellung zu erhalten; und
Mittel zum Implementieren, über die Netzwerksteuerung, wenn die Feststellung anzeigt, dass die Abhilfe erforderlich ist, einer mit der virtuellen Netzwerkfunktion assoziierten Maßnahme zur Einhaltung gesetzlicher Vorschriften als Abhilfe, wobei die Maßnahme zur Einhaltung gesetzlicher Vorschriften das Verhindern eines Datenflusses zu einer virtuellen Netzwerkfunktion beinhaltet, die die Anforderung zur Einhaltung gesetzlicher Vorschriften nicht erfüllt.

14. Vorrichtung nach Anspruch 13, ferner mit Mitteln zum Implementieren des Verfahrens nach einem der Ansprüche 2 bis 11.

15. Computerprogramm, Computerprogrammprodukt oder Logik, codiert auf einem materiellen, computerlesbaren Medium, das Befehle zum Implementieren des Verfahrens nach einem der Ansprüche 1 bis 11 enthält.

## Revendications

1. Procédé comprenant de :
recevoir, au niveau d'un contrôleur de réseau (212), une exigence réglementaire de conformité associée à une fonction réseau virtuelle (VNF1-VNF5) via un champ d'entête de service réseau (210), la fonction réseau virtuelle faisant partie d'une chaîne de fonctions de service ;
recevoir, au niveau du contrôleur de réseau, un statut réglementaire de conformité associé à la fonction réseau virtuelle, le statut réglementaire de conformité étant inclus dans des métadonnées de l'en-tête de service réseau ;
sur la base de l'exigence réglementaire de conformité et du statut réglementaire de conformité dans l'en-tête de service réseau, déterminer, au niveau du contrôleur de réseau, qu'un remède est requis pour que la fonction réseau virtuelle se conforme à l'exigence réglementaire de conformité pour donner lieu à une détermination ; et
lorsque la détermination indique que le remède est requis, mettre en œuvre, par l'intermédiaire du contrôleur de réseau, une action réglementaire de conformité associée à la fonction réseau virtuelle en tant que remède, dans lequel l'action réglementaire de conformité comprend l'empêchement de la circulation de données vers une fonction réseau virtuelle qui n'est pas en conformité avec l'exigence réglementaire de conformité.

2. Procédé selon la revendication 1, comprenant en outre de :
recevoir des données supplémentaires comprenant l'un des éléments suivants : (1) une géolocalisation associée à l'exigence réglementaire de conformité, (2) un identificateur de nuage, (3) un identificateur de charge de travail et (4) un identificateur de locataire, les données supplémentaires étant éventuellement corrélées avec l'exigence réglementaire de conformité et le statut réglementaire de conformité pour déterminer le remède.

3. Procédé selon la revendication 2, dans lequel les données supplémentaires comprennent la géolocalisation, et dans lequel le remède comprend le maintien de données d'application à l'intérieur d'une frontière de pays.

4. Procédé selon l'une quelconque des revendications 1 à 3, dans lequel l'exigence réglementaire de conformité comprend une durée pendant laquelle les données doivent être conservées avant d'être supprimées.

5. Procédé selon l'une quelconque des revendications 1 à 4, dans lequel l'exigence réglementaire de conformité comprend la fourniture d'une piste d'audit de tous les accès et activités vis-à-vis de certaines informations.

6. Procédé selon l'une quelconque des revendications 1 à 5, dans lequel le champ d'en-tête de service réseau comprend une métadonnée de type 1 ou de type 2.

7. Procédé selon l'une quelconque des revendications 1 à 6, dans lequel le contrôleur de réseau comprend un contrôleur de réseau défini par logiciel dans un réseau défini par logiciel, le contrôleur de réseau défini par logiciel ayant une politique qui régit la génération du remède.

8. Procédé selon l'une quelconque des revendications 1 à 7, dans lequel l'action réglementaire de conformité comprend la mise en œuvre d'une politique de routage de trafic de données.

9. Procédé selon l'une quelconque des revendications 1 à 8, dans lequel l'exigence réglementaire de conformité est appliquée à une création de la chaîne de fonctions de service, éventuellement dans lequel l'exigence réglementaire de conformité est associée à un fournisseur de nuage.

10. Procédé selon l'une quelconque des revendications 1 à 9, dans lequel l'exigence réglementaire de conformité s'applique sur une base par flux ou par bond entre des fonctions réseau virtuelles dans une chaîne de fonctions de service.

11. Procédé selon l'une quelconque des revendications 1 à 10, comprenant en outre de :
analyser un flux de trafic associé à une fonction réseau virtuelle pour produire une analyse ; et
classer une exigence de conformité réglementaire en fonction de l'analyse.

12. Système (100) comprenant :
un ou plusieurs processeurs (110) ; et
un dispositif de stockage lisible par ordinateur (130) stockant des instructions qui, lorsqu'elles sont exécutées par le ou les processeurs, amènent le ou les processeurs à effectuer des opérations comprenant un procédé selon l'une quelconque des revendications précédentes.

13. Appareil comprenant un contrôleur de réseau (212), le contrôleur de réseau comprenant :
un moyen pour recevoir une exigence réglementaire de conformité associée à une fonction réseau virtuelle (VNF1-VNF5) via un champ d'en-tête de service réseau (210), la fonction réseau virtuelle faisant partie d'une chaîne de fonctions de service ;
un moyen pour recevoir un statut réglementaire de conformité associé à la fonction réseau virtuelle, le statut réglementaire de conformité étant inclus dans des métadonnées dans l'en-tête de service réseau ;
un moyen pour déterminer, sur la base de l'exigence réglementaire de conformité et du statut réglementaire de conformité dans l'en-tête de service réseau, qu'un remède est nécessaire pour que la fonction réseau virtuelle se conforme à l'exigence réglementaire de conformité pour donner lieu à une détermination ; et
un moyen pour mettre en œuvre, lorsque la détermination indique que le remède est requis, par l'intermédiaire du contrôleur de réseau, une action réglementaire de conformité associée à la fonction réseau virtuelle en tant que remède, dans lequel l'action réglementaire de conformité comprend l'empêchement de la circulation de données vers une fonction réseau virtuelle qui n'est pas en conformité avec l'exigence réglementaire de conformité.

14. Appareil selon la revendication 13, comprenant en outre des moyens de mise en œuvre du procédé selon l'une quelconque des revendications 2 à 11.

15. Programme d'ordinateur, produit de programme d'ordinateur ou logique codés sur un support tangible lisible par ordinateur comprenant des instructions pour mettre en œuvre le procédé selon l'une quelconque des revendications 1 à 11.
